# EUROPÄISCHE PATENTSCHRIFT

(11) **EP 0 561 436 B1**
(45) Veröffentlichungstag und Bekanntmachung des Hinweises auf die Patenterteilung: **06.05.1999**
(21) Anmeldenummer: 93200397.3
(22) Anmeldetag: 15.02.1993
(51) Int. Cl.: C04B 7/38, C04B 7/43, B01J 8/18, C04B 7/44

(54) **Verfahren zur Herstellung von Zement**
Process of making cement
Procédé pour la production de ciment

(30) Priorität: 20.03.1992 DE 4208977
(43) Veröffentlichungstag der Anmeldung: 22.09.1993
(73) Patentinhaber: Metallgesellschaft Aktiengesellschaft, 60325 Frankfurt am Main (DE)
(72) Erfinder: Beisswenger, Hans, W-6232 Bad Soden 1 (DE); Eschenburg, Jochim, W-6382 Friedrichsdorf 4 (DE); Löffler, Johannes, Dr., W-6380 Bad Homburg 1 (DE)

(56) Entgegenhaltungen:
- DE-A- 3 218 232
- DE-A- 3 533 775
- ZEMENT, KALK, GIPS, Bd. 35,Nr. 5, Mai 1982 WIESBADEN DE, Seiten 259-263, W.G.QUITTKAT ET AL 'Brennstoffersparnis bei der Zementproduktion durch Pyrolyse'
- ZEMENT, KALK, GIPS, Nr. 5, Mai 1991 WIESBADEN DE, Seiten 217-220, A.SCHWEIZER ET AL. 'Heizgas aus Baumrinde zum Betrieb eines Kalkdrehofens in einem Sulfat-Zellstoffwerk'
- CHEMICAL ABSTRACTS, vol. 108, no. 24, 13.Juni 1988 Columbus, Ohio, US; abstract no. 209166b, 'Processing of cement raw materials' & CS-A-241 602 (J.KRUCKOVA)

## Beschreibung

Die Erfindung bezieht sich auf ein Verfahren zur Herstellung von Zement durch Vorwärmen des Rohmehls in einem Zyklonvorwärmer, Kalzinieren des vorgewärmten Rohmehls, Brennen des kalzinierten Rohmehls in einem Drehrohrofen, Kühlen des im Drehrohrofen gebildeten Zementklinkers und Mahlen des Zementklinkers.

Zement ist ein anorganisches nichtmetallisches Pulver, das mit Wasser gemischt wird, nach dem Mischen selbständig erhärtet und nach dem Erhärten dauerhaft fest bleibt. Man unterscheidet zwischen den sog. Normzementen, Portlandzement, Eisenportlandzement, Hochofenzement und Traßzement. Die in der Bundesrepublik Deutschland hergestellten Normzemente haben folgende chemische Zusammensetzung: CaO 41 bis 67 Gew.%, SiO₂ 18 bis 33 Gew.%, Al₂O₃ 3 bis 14 Gew.%, Fe₂O₃ 0,5 bis 4,5 Gew.%, MnO 0 bis 0,6 Gew.%, MgO 0,5 bis 9 Gew.%, SO₃ 1 bis 4,5 Gew.%.

Die Herstellung des Zements umfaßt das Gewinnen und Aufbereiten der Rohstoffe, das Brennen des Rohstoffgemisches zu Zementklinker, das Herstellen der Zumahlstoffe sowie das gemeinsame Vermahlen des Klinkers und ggf. eines oder mehrerer Zumahlstoffe mit Kalziumsulfat als Erstarrungsregler. Die Rohstoffe (Kalkstein und Ton) werden trocken aufgemahlen und liefern das Rohmehl. Das Rohmehl wird während des Mahlvorgangs durch ein heißes Gas getrocknet, danach aufgewärmt und anschließend zu Zementklinker gebrannt. Je nach Bauart des Brennofens wird das Rohmehl während ca. 1 bis 5 Stunden auf die Brenntemperatur von ca. 1 450°C aufgewärmt und verbleibt etwa 10 bis 20 Minuten bei dieser Temperatur. Anschließend wird der Zementklinker möglichst schnell abgekühlt. Beim Erhitzen des Rohmehls, das noch eine Restfeuchte von < 1 % aufweisen kann, wird zunächst bis etwa 100°C das anhaftende Wasser und bis etwa 600°C das im Ton adsorptiv und chemisch gebundene Wasser entfernt. Die Zersetzung des Kalziumkarbonats beginnt in Gegenwart von SiO₂, Al₂O₃ und Fe₂O₃ schon bei 550 bis 600°C und verläuft oberhalb 900°C sehr schnell. Das Brenngut verliert während des Brennens ca. 35 Gew.% seines Trockengewichts. In der Bundesrepublik Deutschland werden ca. 97 % des Zementklinkers in Drehrohröfen gebrannt, die unter 3 bis 4° geneigt sind. Infolge Neigung und Drehung des Ofens läuft das am oberen Ende aufgegebene vorgewärmte Rohmehl einer Kohlenstaub-, Öl- oder Gasflamme entgegen, die am unteren Ende des Ofens brennt. Im Bereich der Flamme mit Gastemperaturen von 1800 bis 2000°C werden Brennguttemperaturen von 1350 bis 1500°C erreicht, die für die Klinkerbildung erforderlich sind. Nach dem Brennen verläßt der Klinker den Drehrohrofen und fällt in einen Kühler, der als Kühlmedium mit Luft arbeitet und in dem der Klinker bis zu einer Temperatur von 800 bis 900°C gekühlt wird. Die zur Kühlung des Zementklinkers verwendete Luft wird dem Drehrohrofen als Verbrennungsluft zugeführt. Die Vorwärmung des Rohmehls erfolgt entweder im Drehrohrofen selbst oder aber in einem separaten Vorwärmer, der vorzugsweise als aus mehreren Zyklonen bestehende Apparatur gestaltet ist. Die heißen Abgase des Drehrohrofens durchströmen den Zyklonvorwärmer von unten nach oben, und das trockene Rohmehl wird den Abgasen vor der obersten Zyklonstufe zugegeben, in den einzelnen Zyklonen wieder aus dem Gas abgeschieden und vor der nächsten Zyklonstufe erneut im Gasstrom suspendiert. Das Rohmehl wird im Vorwärmer in der Regel auf eine Temperatur von ca. 800°C vorgewärmt, während das Abgas nach dem Verlassen der obersten Zyklonstufe noch Temperaturen von 300 bis 400°C aufweist. Im Zyklonvorwärmer kann bereits eine teilweise Kalzinierung des Rohmehls erfolgen. Entsprechend dem Stand der Technik wird das im Vorwärmer vorgewärmte und in geringem Umfang kalzinierte Rohmehl in einem separat befeuerten Kalzinator kalziniert, wobei der Kalzinator vorteilhaft als Zyklon ausgebildet ist und den Hauptteil der Kalzinationsarbeit leistet. Das kalzinierte Rohmehl wird zur Klinkerung in den Drehrohrofen geleitet, der außerdem die restliche Kalzinationsarbeit leistet. Der Wärmebedarf des Kalzinators beträgt 30 bis 70 % des Gesamtwärmebedarfs des Klinkerbrennprozesses. Zur Herstellung von Zement wird der Zementklinker allein oder mit den Zumahlstoffen Hüttensand, Traß, Ölschiefer oder Flugasche gemahlen. Dem Mahlgut wird außerdem Gips zum Regeln des Erstarrens zugesetzt.

Da die Herstellung des Zementklinkers bei sehr hohen Temperaturen erfolgt, wird der Drehrohrofen mit vergleichsweise hochwertigen Brennstoffen beheizt, die außerdem den Vorteil haben, daß sie die Zusammensetzung des Rohmehls durch ihren relativ geringen Aschegehalt nur unwesentlich verändern. Der Einsatz minderwertiger, aschereicher Brennstoffe ist deshalb schwierig, weil sie einen zu geringen Heizwert haben und infolge schwankender sowie hoher Aschegehalte die Qualität des Zements so verändern, daß er den in Normen festgelegten Qualitätsanforderungen nicht mehr genügt. Außerdem haben minderwertige Brennstoffe häufig einen hohen Gehalt an Begleitstoffen, die nicht oder nur teilweise in den Zement gelangen dürfen. Schließlich bilden sich beim Brennen im Drehrohrofen und beim Kalzinieren im Kalzinator Stickoxide, die aus dem Abgas entfernt werden müssen.

Der Erfindung liegt die Aufgabe zugrunde, ein Verfahren zur Herstellung von Zement zu schaffen, das die Verwendung minderwertiger Brennstoffe gestattet und das ein Abgas liefert, welches weitgehend frei von Schadgasen, wie z.B. Stickoxiden, Kohlenwasserstoffen und Kohlenmonoxid, ist.

Die der Erfindung zugrundeliegende Aufgabe wird dadurch gelöst, daß ein Teil der zur Zementherstellung verwendeten hochwertigen Brennstoffe durch minderwertige Brennstoffe ersetzt wird, wobei die minderwertigen Brennstoffe in einer Wirbelschicht unter Sauerstoffdefizit durch Teilverbrennung vergast werden und wobei das Gas in drei Teilströme geteilt wird, von denen der erste dem Hauptbrenner des Drehrohrofens, der zweite dem Abgasstrom des Drehrohrofens derart, daß eine Entstickung erfolgt und der dritte dem Kalzinator zugeführt wird. Als hochwertige Brennstoffe werden bei der Zementherstellung - also sowohl im Drehrohrofen als auch im Kalzinator - Öl, Gas und/oder hochwertige Kohle mit einem unteren Heizwert Hᵤ > 4000 kcal/kg benötigt. Diese Brennstoffe sollen gemäß der Erfindung weitestgehend durch minderwertige Brennstoffe, wie z.B. Biomasse, Abfallholz, Chemieabfälle, Altreifen und Papier, ersetzt werden. Die Vergasung der minderwertigen Brennstoffe erfolgt vorteilhaft in der Wirbelschicht. Die in der Wirbelschicht entstehenden festen Vergasungsrückstände werden unten am Reaktor oder als Flugstaub ausgetragen. Die Bodenasche des Reaktors hat einen sehr geringen Kohlenstoffgehalt, während der sehr feinkörnige Flugstaub wegen seines hohen Kohlenstoffgehalts äußerst reaktionsfähig ist. Nach der Erfindung wird ein Teil des durch Vergasung erzeugten Gases im Hauptbrenner des Drehrohrofens verbrannt und ersetzt so einen Teil des hochwertigen Brennstoffs, der dem Drehrohrofen nach den bekannten Verfahren zuzuführen ist. Der zweite Teilstrom des Gases wird mit dem Abgasstrom vermischt, der den Dehrohrofen verläßt. Der dritte Teilstrom des Gases wird dem Kalzinator zugeführt und ersetzt hier den üblicherweise verwendeten hochwertigen Brennstoff. Das dem Drehrohrofenabgas zugeführte Gas wirkt gegenüber den Stickoxiden als Reduktionsmittel, denn insbesondere die im Gas enthaltenen Substanzen NH₃, CO und H₂ reduzieren die Stickoxide in Gegenwart von Sauerstoff bei Temperaturen von 800 bis 1100°C zu Stickstoff. Überschüssige brennbare Bestandteile des Gases werden in der Kalzinationsstufe verbrannt.

Der Vorteil des erfindungsgemäßen Verfahrens besteht also darin, daß auch minderwertige Brennstoffe zur Herstellung von Zement eingesetzt werden können, ohne daß die bei der Verbrennung der minderwertigen Brennstoffe entstehenden Schadstoffe in die Atmosphäre oder in den Zement gelangen. Das erfindungsgemäße Verfahren hat ferner den Vorteil, daß eine separate Abgasentstickung nicht durchgeführt werden muß. Schließlich ist es in vielen Fällen möglich, auch die Vergasungsrückstände als Rohstoff für die Zementherstellung zu nutzen, denn sie enthalten weniger als 2 Gew.% Kohlenstoff.

Nach der Erfindung hat es sich als besonders vorteilhaft erwiesen, wenn 50 bis 70 % der hochwertigen Brennstoffe durch minderwertige Brennstoffe ersetzt werden. Eine derartige Verfahrensführung ist besonders wirtschaftlich.

Nach der Erfindung ist ferner vorgesehen, daß der minderwertige Brennstoff in der zirkulierenden Wirbelschicht vergast wird. Hierbei wird der Brennstoff in einen einbautenfreien Reaktor gefördert, dem außerdem die zur Vergasung benötigte Luft in Form mehrerer Teilströme zugeführt wird. Im Reaktor herrscht eine Temperatur von 750 bis 1000°C, bei der der minderwertige Brennstoff autotherm in gasförmige brennbare Substanzen überführt wird. Die vom Gasstrom aus dem Reaktor ausgetragenen Feststoffteilchen werden in einem nachgeschalteten Abscheider, vorzugsweise einem Zyklon, aus dem Gasraum abgetrennt und über eine Rückführleitung erneut in den Reaktor eingebracht. Aus dem Reaktor wird unten kontinuierlich ein Teil der Vergasungsrückstände abgezogen, während das vorentstaubte brennbare Gas den Zyklon verläßt. Innerhalb des Reaktors herrscht eine Gasgeschwindigkeit von 2 bis 12 m/sec. Die Dichte der im Reaktor befindlichen Gas-Feststoff-Suspension nimmt von unten nach oben ab und liegt zwischen 50 bis 500 kg unten sowie zwischen 0,5 und 10 kg oben. Mithin enthält der Reaktor ein erhebliches Feststoffinventar, das als Wärmespeicher dient, konstante Vergasungsbedingungen ermöglicht sowie einen sehr geringen Kohlenstoffgehalt der unten abgezogenen Vergasungsrückstände gewährleistet.

In weiterer Ausgestaltung der Erfindung ist vorgesehen, daß die dem Drehrohrofen zugeführte Verbrennungsluft und die der Wirbelschicht zugeführte Vergasungsluft im Klinkerkühler vorgewärmt wird. Durch diese Maßnahme wird eine vorteilhafte Energiebilanz des Gesamtprozesses erreicht.

Ferner ist in weiterer Ausgestaltung der Erfindung vorgesehen, daß das bei der Vergasung der minderwertigen Brennstoffe anfallende Gas auf eine Temperatur von 70 bis 400°C abgekühlt und in mindestens einem Zyklon und/oder mindestens einem Elektrofilter und/oder mindestens einem Schlauchfilter entstaubt wird. In manchen Fällen hat es sich nämlich als vorteilhaft erwiesen, wenn das bei der Vergasung erzeugte Gas vor seiner weiteren Nutzung entstaubt wird.

Nach der Erfindung ist auch vorgesehen, daß das entstaubte Gas bei 70 bis 400°C mit Kalziumoxid und/oder Kalziumhydroxid zur Reaktion gebracht wird, wobei HF und HCl nahezu quantitativ sowie H₂S und SO₂ teilweise mit den Kalziumverbindungen zu den entsprechenden Salzen reagieren.

Erfindungsgemäß hat es sich als vorteilhaft erwiesen, wenn das Gas nach der Entstaubung oder nach Reaktion mit CaO und/oder Ca(OH)₂ mit der Wärme aufgeheizt wird, die dem Gas vor der Entstaubung oder vor der Reaktion mit den Kalziumverbindungen entzogen wurde.

Schließlich ist nach der Erfindung vorgesehen, daß dem Gas ein vierter Teilstrom entnommen wird, der verbrannt und zur Aufheizung der Abluft des Klinkerkühlers verwendet wird. Durch diese Maßnahme ist es möglich, die Temperatur der Klinkerkühler-Abluft von 400°C auf 600 bis 700°C zu erhöhen und so hochwertige Energie zu erzeugen.

Aus der Veröffentlichung von Schweizer, Herbert und Löffler, Zement-Kalk-Gips, 44. Jahrgang, 1991, Seiten 217 bis 220, ist zwar ein Verfahren zum Brennen von CaCO₃ mit einem gasförmigen Brennstoff bekannt, der durch Vergasung minderwertiger Brennstoffe (Baumrinde, Holzreste, Zellulosefasern) in der zirkulierenden Wirbelschicht hergestellt wird, und in der zitierten Veröffentlichung wird auch vorgeschlagen, das durch Vergasung in der zirkulierenden Wirbelschicht gewonnene Gas zur teilweisen Substitution des Hauptbrennstoffs in Zementdrehrohröfen zu verwenden. Der Fachmann konnte das erfindungsgemäße Verfahren dennoch nicht aus der Veröffentlichung von Schweizer, Herbert und Löffler herleiten, da die Veröffentlichung keine Hinweise darauf enthält, wie das durch Vergasung minderwertiger Brennstoffe erzeugte Brenngas im einzelnen in das Zementherstellungsverfahren eingekoppelt werden muß. Auch die Tatsache, daß aus der DE-AS 2 411 672 ein Verfahren zum Entfernen von Stickoxiden aus sauerstoffhaltigen Verbrennungsabgasen durch selektive Reduktion der Stickoxide mit NH₃ in Gegenwart oder Abwesenheit von H₂, CO und/oder Kohlenwasserstoffen bei Temperaturen von 705 bis 1095°C bekannt ist, konnte den Fachmann nicht zur Schaffung des erfindungsgemäßen Verfahrens veranlassen, denn die Druckschrift enthält keine Anregung dazu, die bei der Vergasung minderwertiger Brennstoffe erzeugten Brenngase zur Entstickung des bei der Zementherstellung anfallenden Abgases zu verwenden.

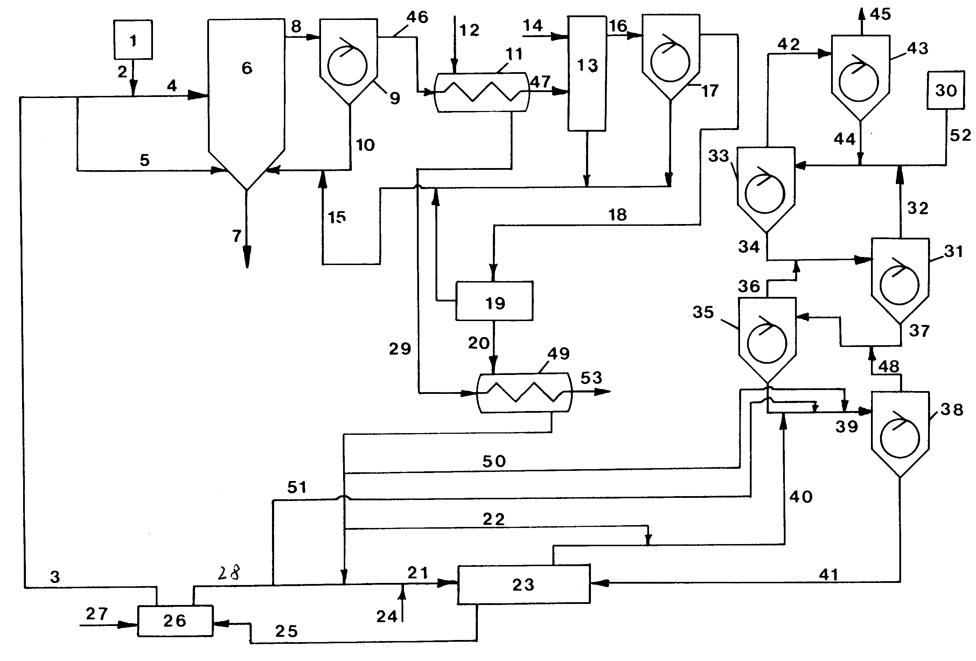

Der Gegenstand der Erfindung wird nachfolgend anhand des in der Zeichnung dargestellten Verfahrensfließbildes näher erläutert.

Im Vorratsbunker 1 werden zerkleinerte Holzabfälle gelagert, die als minderwertiger Brennstoff dienen, den Vorratsbunker 1 über die Leitung 2 verlassen und mit der in der Leitung 3 geführten Vergasungsluft gemischt werden. Das Luft-Brennstoff-Gemisch gelangt über die Leitung 4 in den Reaktor 6, in dem eine zirkulierende Wirbelschicht aufrecht erhalten wird. Über die Leitung 5 wird ein Teilstrom der in der Leitung 3 geführten Vergasungsluft in den unteren Teil des Reaktors 6 eingebracht. Der Brennstoff wird im Reaktor 6 durch die in den Leitungen 4 und 5 geführten Luftströme fluidisiert. Die dem Reaktor 6 zugeführte Luftmenge wird so bemessen, daß die Vergasungsreaktion mit einer Sauerstoffmenge abläuft, die 30 bis 60 % geringer als die Sauerstoffmenge ist, die zur vollständigen Verbrennung des minderwertigen Brennstoffs zu CO₂ und H₂O erforderlich wäre - die Luftzahl λ liegt also bei 0,4 bis 0,7. Im Reaktor 6 herrscht eine Vergasungstemperatur von 750 bis 950°C.

Während die im unteren Reaktorteil anfallenden Vergasungsrückstände, die einen Kohlenstoffgehalt von ca. 2 Gew.% aufweisen, über die Leitung 7 aus dem Reaktor 6 abgeführt werden, gelangt eine Gas-Feststoff-Suspension über die Leitung 8 in den Zyklon 9, wo die aus dem Reaktor 6 ausgetragenen staubförmigen Feststoffteilchen weitgehend aus dem Gas abgeschieden werden. Die im Zyklon 9 abgeschiedenen Feststoffe werden über die Leitung 10 in den Reaktor 6 zurückgeführt. Die Kreislaufführung der Feststoffe ist dafür verantwortlich, daß aus der Leitung 7 ein Vergasungsrückstand mit einem sehr geringen Kohlenstoffgehalt abgezogen werden kann, der in einigen Fällen - je nach den Qualitätsanforderungen an den Zement - dem Zementrohmehl zugemischt wird.

Das staubhaltige Gas wird über die Leitung 46 in den Kühler 11 gefördert, wo eine Kühlung des Gases auf eine Temperatur von 200 bis 400°C erfolgt. Der Kühler 11 wird mit Luft als Kühlmedium betrieben, die über die Leitung 12 in den Kühler 11 gelangt und nach der Aufheizung über die Leitung 29 in den Wärmeaustauscher 49 geführt wird, wo sie das in der Leitung 20 fließende gereinigte Gas aufheizt. Die zur Wiederaufheizung des gereinigten Gases verwendete Luft verläßt den Wärmeaustauscher 49 über die Leitung 53.

Das gekühlte staubhaltige Gas gelangt über die Leitung 47 in den Flugstromreaktor 13, dem über die Leitung 14 CaO und/oder Ca(OH)₂ zugeführt wird. Die Kalziumverbindungen reagieren zumindest teilweise mit den Schadstoffen HF, HCl, SO₂ und H₂S, und die bei der Reaktion gebildeten Salze werden aus dem Flugstromreaktor 13 in die Leitung 15 gefördert, die in der Leitung 10 mündet; die im Flugstromreaktor 13 anfallenden Feststoffe gelangen mithin in den Reaktor 6. Das aus dem Flugstromreaktor 13 austretende Gas gelangt zunächst über die Leitung 16 in den Zyklon 17 und anschließend über die Leitung 18 in das Elektrofilter 19. In beiden Aggregaten erfolgt die Entstaubung des Gases, wobei der im Zyklon 17 und im Elektrofilter 19 anfallende Staub in die Leitung 15 gefördert wird. Das entstaubte Gas, welches einen unteren Heizwert Hᵤ von ca. 1450 kcal/Nm³ besitzt und die brennbaren Bestandteile CO, H₂ sowie CH₄ enthält, verläßt den Elektrofilter 19 über die Leitung 20 und wird nach der Aufheizung in drei Teilströme 21, 22 und 50 geteilt.

Der Teilstrom 21 gelangt in den Hauptbrenner des Drehrohrofens 23, in dem der Zementklinker durch Brennen bei ca. 1500°C erzeugt wird. Um die Brenntemperatur von ca. 1500°C im Drehrohrofen 23 aufrecht zu erhalten, wird dem Brenner des Drehrohrofens über die Leitung 24 hochwertiger Brennstoff - also Erdgas oder Heizöl - zugeführt. Dem Drehrohrofen 23 wird der Zementklinker über die Leitung 25 entnommen und im Klinkerkühler 26 abgekühlt. Der Klinkerkühler 26 wird mit Luft als Kühlmedium betrieben. Die Luft gelangt über die Leitung 27 in den Klinkerkühler 26, wird dort erhitzt, und anschließend teilweise über die Leitung 28 als Verbrennungsluft in den Drehrohrofen 23, teilweise über die Leitung 3 als Vergasungsluft in den Reaktor 6 und teilweise über die Leitung 51 als Verbrennungsluft in den Kalzinator 38 gefördert.

Das Zementrohmehl befindet sich im Vorratsbunker 30 und wird in der Leitung 52 im Abgasstrom suspendiert, der aus dem Wärmeaustauscherzyklon 31 über die Leitung 32 in den Wärmeaustauscherzyklon 33 gelangt. Das in der Leitung 32 und dem Wärmeaustauscherzyklon 33 vorgewärmte Zementrohmehl wird nach der Abscheidung im Zyklon 33 über die Leitung 34 in den Wärmeaustauscherzyklon 31 gefördert. Dies geschieht mit dem Abgas, das aus dem Wärmeaustauscherzyklon 35 über die Leitung 36 abgeführt wird. Während des Transports in der Leitung 34 und während der Verweilzeit im Wärmeaustauscherzyklon 31 erfolgt die weitere Aufwärmung des Zementrohmehls, das nach der Abscheidung über die Leitung 37 in den Wärmeaustauscherzyklon 35 gelangt. Das in der Leitung 37 geführte Zementrohmehl wird im Abgasstrom suspendiert, der aus dem als Zyklon gestalteten Kalzinator 38 über die Leitung 48 austritt. Dem Kalzinator 38 wird das im Wärmeaustauscherzyklon 35 abgeschiedene vorgewärmte Zementrohmehl über die Leitung 39 zugeführt, in die auch die Leitung 40 mündet, welche dem Transport des aus dem Drehrohrofen 23 austretenden heißen Abgases dient. Das vorgewärmte Zementrohmehl wird im Kalzinator 38 kalziniert, anschließend abgeschieden und danach über die Leitung 41 in den Drehrohrofen 23 geführt, wo der eigentliche Brennvorgang abläuft.

Der Gasteilstrom 22 wird dem in der Leitung 40 geführten Abgas des Drehrohrofens 23 zugemischt. Hierbei erfolgt eine weitgehende Abgasentstickung. Der dritte Gasteilstrom gelangt über die Leitung 50 in den Kalzinator 38, wo er mit der in der Leitung 51 geführten, vorgewärmten Luft verbrannt wird. Die dabei freiwerdende Wärme bewirkt die Kalzination des Zementrohmehls. Im Kalzinator 38 und in der Leitung 40 erfolgt eine so weitgehende Entstickung, daß der NOₓ-Gehalt um mindestens 90 % von ca. 2000 mg NO₂/Nm³ auf ca. 200 mg NO₂/Nm³ herabgesetzt wird. Die Zumischung des Gasteilstroms 22 erfolgt an der Stelle der Leitung 40, in der eine Temperatur < 1100°C herrscht. Das in der Leitung 40 geführte Abgas des Drehrohrofens hat noch einen Sauerstoffgehalt von 1,5 bis 10 %. Da das in der Leitung 22 geführte Brenngas einen NH₃-Gehalt von 0,6 bis 2 g/Nm³ aufweist und da zur Reduktion von 100 mg NO₂ ca. 40 mg NH₃ benötigt werden, kann über eine kontinuierliche Messung des NH₃-Gehalts des in der Leitung 22 geführten Gasteilstroms die für die Entstickungsreaktion erforderliche Gasmenge gesteuert werden. Die mit dem NH₃ zugeführten weiteren Reduktionsmittel, vor allem CO und H₂, werden in der Kalzinationsstufe zusammen mit dem in der Leitung 50 geführten Gasteilstrom verbrannt. Auch im Kalzinator kommt es nicht zu einer Neubildung von NOₓ.

Das aus dem Vorwärmzyklon 33 austretende Abgas gelangt über die Leitung 42 in den Zyklon 43, wo eine Entstaubung stattfindet. Der Staub wird über die Leitung 44 in den Vorwärmzyklon 33 gefördert, während das entstaubte, abgekühlte, entschwefelte und entstickte Abgas die Anlage über die Leitung 45 verläßt.

## Patentansprüche

1. Verfahren zur Herstellung von Zement durch Vorwärmen des Rohmehls in einem Zyklonvorwärmer, Kalzinieren des vorgewärmten Rohmehls, Brennen des kalzinierten Rohmehls in einem Drehrohrofen, Kühlen des im Drehrohrofen gebildeten Zementklinkers und Mahlen des Zementklinkers, dadurch gekennzeichnet, daß ein Teil der zur Zementherstellung verwendeten hochwertigen Brennstoffe durch minderwertige Brennstoffe ersetzt wird, wobei die minderwertigen Brennstoffe in einer Wirbelschicht unter Sauerstoffdefizit durch Teilverbrennung vergast werden und wobei das Gas in drei Teilströme geteilt wird, von denen der erste dem Hauptbrenner des Drehrohrofens, der zweite dem Abgasstrom des Drehrohrofens derart, daß eine Entstickung erfolgt und der dritte dem Kalzinator zugeführt wird.

2. Verfahren nach Anspruch 1, dadurch gekennzeichnet, daß 50 bis 70 % der hochwertigen Brennstoffe durch minderwertige Brennstoffe ersetzt werden.

3. Verfahren nach den Ansprüchen 1 bis 2, dadurch gekennzeichnet, daß der minderwertige Brennstoff in einer zirkulierenden Wirbelschicht vergast wird.

4. Verfahren nach den Ansprüchen 1 bis 3, dadurch gekennzeichnet, daß die dem Drehrohrofen zugeführte Verbrennungsluft und die der Wirbelschicht zugeführte Vergasungsluft im Klinkerkühler vorgewärmt wird.

5. Verfahren nach den Ansprüchen 1 bis 4, dadurch gekennzeichnet, daß das bei der Vergasung der minderwertigen Brennstoffe anfallende Gas auf eine Temperatur von 70 bis 400°C abgekühlt und in mindestens einem Zyklon und/oder mindestens einem Elektrofilter und/oder mindestens einem Schlauchfilter entstaubt wird.

6. Verfahren nach den Ansprüchen 1 bis 5, dadurch gekennzeichnet, daß das entstaubte Gas bei 70 bis 400°C mit CaO und/oder Ca(OH)₂ zur Reaktion gebracht wird.

7. Verfahren nach den Ansprüchen 1 bis 6, dadurch gekennzeichnet, daß das Gas nach der Entstaubung oder nach der Reaktion mit CaO und/oder Ca(OH)₂ mit der Wärme aufgeheizt wird, die dem Gas vor der Entstaubung oder vor der Reaktion mit den Kalziumverbindungen entzogen wurde.

8. Verfahren nach den Ansprüchen 1 bis 7, dadurch gekennzeichnet, daß dem Gas ein vierter Teilstrom entnommen wird, der verbrannt und zur Aufheizung der Abluft des Wirbelkühlers verwendet wird.

## Claims

1. A method for the manufacture of cement by preheating the raw meal in a cyclone preheater, calcining the preheated raw meal, burning the calcined raw meal in a rotary kiln, cooling the cement clinker formed in the rotary kiln and grinding the cement clinker, characterised in that a portion of the high-grade fuels used for the manufacture of cement is replaced by lower-grade fuels, the lower-grade fuels being gasified in a fluidised bed with an oxygen deficit by partial combustion and the gas being divided into three partial streams, the first of which is fed to the main burner of the rotary kiln, the second of which to the exhaust-gas stream of the rotary kiln such that removal of nitrogen oxides takes place and the third of which to the calciner.

2. A method according to Claim 1, characterised in that 50 to 70% of the high-grade fuels are replaced by lower-grade fuels.

3. A method according to Claims 1 to 2, characterised in that the lower-grade fuel is gasified in a circulating fluidised bed.

4. A method according to Claims 1 to 3, characterised in that the combustion air fed to the rotary kiln and the gasification air fed to the fluidised bed are preheated in the clinker cooler.

5. A method according to Claims 1 to 4, characterised in that the gas produced upon gasification of the lower-grade fuels is cooled to a temperature of 70 to 400°C and undergoes dust removal in at least one cyclone and/or at least one electrostatic precipitator and/or at least one bag filter.

6. A method according to Claims 1 to 5, characterised in that the dedusted gas is reacted at 70 to 400°C with CaO and/or Ca(OH)₂.

7. A method according to Claims 1 to 6, characterised in that the gas after dust removal or after the reaction with CaO and/or Ca(OH)₂ is heated using the heat which has been removed from the gas before the dust removal or before the reaction with the calcium compounds.

8. A method according to Claims 1 to 7, characterised in that a fourth partial stream is removed from the gas, which partial stream is burned and is used to heat the exhaust air from the fluidised cooler.

## Revendications

1. Procédé de production de ciment par préchauffage de la farine crue dans un préchauffeur à cyclone, par calcination de la farine crue préchauffée, par combustion de la farine crue calcinée dans un four tubulaire tournant, par refroidissement du klinker de ciment formé au four tubulaire tournant et par broyage du klinker de ciment, caractérisé en ce qu'il consiste à remplacer une partie des combustibles de grande valeur utilisés pour la production du ciment par des combustibles de moindre valeur, les combustibles de moindre valeur étant gazéifiés avec un défaut d'oxygène par combustion partielle dans un lit fluidisé et le gaz étant subdivisé en trois sous-courants dont le premier est envoyé au brûleur principal du four tubulaire tournant, le second au courant de gaz qui sort du four tubulaire tournant de façon à effectuer une élimination d'azote et le troisième au dispositif de calcination.

2. Procédé suivant la revendication 1, caractérisé en ce qu'il consiste à remplacer de 50 à 70 % des combustibles de grande valeur par des combustibles de moindre valeur.

3. Procédé suivant les revendications 1 à 2, caractérisé en ce qu'il consiste à gazéifier le combustible de moindre valeur dans un lit fluidisé circulant.

4. Procédé suivant l'une des revendications 1 à 3, caractérisé en ce qu'il consiste à préchauffer l'air de combustion amené au four tubulaire tournant et l'air de gazéification amené au lit fluidisé dans le dispositif de refroidissement du klinker.

5. Procédé suivant l'une des revendications 1 à 4, caractérisé en ce qu'il consiste à refroidir à une température de 70 à 400°C le gaz se produisant lors de la gazéification des combustibles de moindre valeur et à le dépoussiérer dans au moins un cyclone et ou au moins un électrofiltre et/ou au moins un filtre à manche.

6. Procédé suivant l'une des revendications 1 à 5, caractérisé en ce qu'il consiste à mettre le gaz dépoussiéré à réagir entre 70 et 400°C sur CaO et/ou sur Ca(OH)₂.

7. Procédé suivant l'une des revendications 1 à 6, caractérisé en ce qu'il consiste à chauffer le gaz après le dépoussiérage ou après la réaction sur CaO et/ou sur Ca(OH)₂ par la chaleur soutirée du gaz avant le dépoussiérage ou avant la réaction sur les composés du calcium.

8. Procédé suivant l'une des revendications 1 à 7 caractérisé en ce qu'il consiste à prélever du gaz un quatrième sous-courant qui est brûlé et qui est utilisé pour chauffer l'air qui sort du dispositif de refroidissement à lit fluidisé.
